**Europäisches Patentamt**

**European Patent Office**

**Office européen des brevets**

(19)

(11) Veröffentlichungsnummer: **0 121 246**
**B1**

(12)

# EUROPÄISCHE PATENTSCHRIFT

(45) Veröffentlichungstag der Patentschrift:
10.08.88

(51) Int. Cl.⁴: **G 06 K 7/00**

(21) Anmeldenummer: **84103497.8**

(22) Anmeldetag: **29.03.84**

(54) Prüfstation für eine Einrichtung zur Verarbeitung und zum Transport von Belegen.

(30) Priorität: **31.03.83 DE 3311851**

(43) Veröffentlichungstag der Anmeldung:
**10.10.84 Patentblatt 84/41**

(45) Bekanntmachung des Hinweises auf die Patenterteilung:
**10.08.88 Patentblatt 88/32**

(84) Benannte Vertragsstaaten:
**AT BE CH DE FR GB IT LI LU NL SE**

(56) Entgegenhaltungen:
**DE-A-2 502 353**
**US-A-3 729 618**
**US-A-3 739 719**

(73) Patentinhaber: **COMPUTER GESELLSCHAFT KONSTANZ MBH, Max- Stromeyer- Strasse 116, D-7750 Konstanz (DE)**

(72) Erfinder: **Schwarz, Hermann, Keplerweg 4, D-7750 Konstanz (DE)**
Erfinder: **Schaaf, Klaus, Dipl.- Ing., Fürstenbergstrasse 15 b, D-7750 Konstanz (DE)**
Erfinder: **Langeneck, Hans, Holländerstrasse 26, D-7750 Konstanz (DE)**

(74) Vertreter: **Mehl, Ernst, Dipl.- Ing., Postfach 22 13 17, D-8000 München 22 (DE)**

## Beschreibung

Die Erfindung betrifft eine Prüfstation für eine Einrichtung zur Verarbeitung und zum Transport von Belegen nach dem Oberbegriff des Patentanspruchs 1.

Aus der DE-A2-26 21 202 ist eine Vorrichtung zum automatischen Prüfen von Banknoten bekannt, bei der eine in der Prüfeinrichtung als falsch oder vermeintlich falsch erkannte Banknote zurücktransportiert und erneut der Prüfeinrichtung zugeführt wird. Diese wiederholte Prüfung wird bis zu einer vorbestinmten Anzahl von Durchgängen ausgeführt, ehe die Banknote endgültig zurückgewiesen wird. Bei dieser bekannten Vorrichtung ist also zwischen zwei Prüfvorgängen immer ein Leerhub notwending, der die Belegdurchlaufrate zusätzlich vermindert.

Ferner ist aus der DE-B1-30 14 491 ein Verfahren zum Lesen von Belegen bekannt, bei dem ein falsch gelesener Beleg gegebenenfalls mehrfach auf eine geschlossene Bahn geschickt und erneut an der Lesestation vorbeigeführt wird. Auch bei diesem bekannten Verfahren geht durch den Umlauf in der geschlossenen Bahn viel Zeit verloren, was wiederum zu Lasten der Belegdurchlaufrate geht.

Ferner ist aus der US-A-3 729 618 eine Lesevorrichtung bekannt, bei der, zur Überprüfung des Druckbilds, ein Lesekopf in einer Hin- und Herbewegung an einem Beleg vorbeigeführt wird. Es wird aber immer nur in einer Richtung gelesen, so daß in diesem Fall auch ein Leerhub entsteht.

Der vorliegenden Erfindung liegt die Aufgabe zugrunde, eine Belegverarbeitungseinrichtung, beider zur Erzielung einer geringen Rückweisungsrate im Normalfall zwei Lesevorgänge vorgesehen sind, in der Weise auszubilden, daß trotz zweimaligem Lesen eine möglichst hohe Belegdurchlaufrate gewährleistet ist.

Die Lösung dieser Aufgabe ergibt sich erfindungsgemäß durch die kennzeichnenden Merkmale des Anspruchs 1 bzw. als alternative Lösung durch die kennzeichnenden Merkmale des Anspruchs 2.

Vorteilhafte Weiterbildungen der Erfindung sind in den Unteransprüchen angegegeben. Die Vorteile der Erfindung bestehen vor allem darin, daß zwischen zwei Lesevorgängen kein Leerhub erforderlich ist, so daß auch bei zweimaligem Lesen eine hohe Belegdurchlaufrate gewährleistet ist.

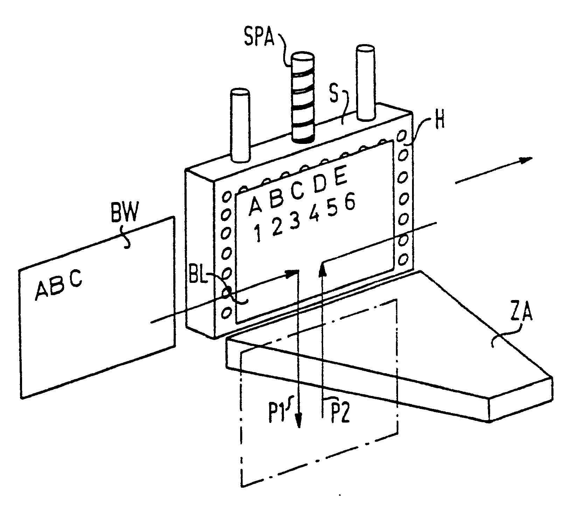

Im folgenden wird ein Ausführungsbeispiel der Erfindung anhand der Zeichnung näher erläutert.

Die Figur zeigt in einer schematischen Perspektivdarstellung den Bewegungsablauf eines Beleges im Bereich der Lesestation einer Belegverarbeitungseinrichtung. Der in vertikaler Lage transportierte Beleg befindet sich zunächst in der Wartestation, die im linken Teil der Figur durch den Beleg BW angedeutet ist. Aus dieser Warteposition gelangt der Beleg in die Lesestation, in der der Beleg BL von einer Halteplatte H erfaßt wird. Diese Halteplatte H ist Teil einer Saugwanne S, die den Beleg über Bohrungen positionsgerecht ansaugt, wobei die Ansaugkraft der Saugwanne S etwas geringer ist als die auf den Beleg in Transportrichtung ausgeübte Kraft, damit der Beleg beim Ein- und Ausfahren in Transportrichtung bewegbar ist. Sobald der Beleg die Lesestation erreicht hat, werden die in der Zeichnung nicht dargestellten Transportrollen des Horizontalantriebs weggeklappt. Der erste Lesevorgang läuft nun in der Weise ab, daß die Saugwanne S mittels eines Spindelantriebs SPA quer zur Transportrichtung nach unten bewegt wird (siehe Pfeil P1), so daß der Beleg BL zeilenweise an dem lediglich durch einen Lichtleiter angedeuteten Zeilenabtaster ZA der Leseeinrichtung vorbeibewegt wird. Unmittelbar daran anschließend erfolgt der zweite Lesevorgang, bei dem die Saugwanne S in umgekehrter Richtung am Zeilenabtaster ZA nach oben fährt (siehe Pfeil P2). Anschließend werden die Transportrollen des Horizontalantriebes wieder angeklappt und der Beleg aus der Lesestation abtransportiert. Gleichzeitig wird der Lesestation der nächste, zwischenzeitlich in der Wartestation bereitgestellte Beleg zugeführt. Durch diesen Bewegungsablauf sind die Verlustzeiten für die Beschickung der Lesestation klein, so daß die Belegdurchlaufrate nicht nachteilig beeinflußt wird.

In kinetischer Umkehr des in der Zeichnung dargestellten und beschriebenen Bewegungsablaufs besteht prinzipiell auch die Möglichkeit, eine feste Saugwanne und einen in Richtung der Pfeile P1 und P2 beweglichen Zeilenabtaster vorzusehen.

## Patentansprüche

1. Prüfstation für eine Einrichtung zur Verarbeitung und zum Transport von Belegen, bei der wenigstens ein zweimaliger Lesevorgang möglich ist, bevor der Beleg endgültig weitertransportiert oder zurückgewiesen wird, dadurch gekennzeichnet, daß in der Prüfstation eine den Beleg (BL) aufnehmende Halteplatte (H) vorgesehen ist, die parallel zur Belegebene und quer zur Transportrichtung in einer Hin- und Herbewegung jeweils einmal an der Leseeinrichtung vorbeibewegbar ist, wobei sowohl während der Hin- als auch der Herbewegung gelesen werden kann.

2. Prüfstation für eine Einrichtung zur Verarbeitung und zum Transport von Belegen, bei der wenigstens ein zweimaliger Lesevorgang möglich ist, bevor der Beleg endgültig weitertransportiert oder zurückgewiesen wird, dadurch gekennzeichnet, daß in der Prüfstation eine den Beleg aufnehmende Halteplatte vorgesehen ist, und daß die der Halteplatte gegenüberliegend angeordnete Abtastanordnung der Leseeinrichtung parallel zur Belegebene und quer zur Transportrichtung in einer Hin- und Herbewegung jeweils einmal am Beleg vorbeibewegbar ist, wobei sowohl während der Hin- als auch der Herbewegung gelesen werden kann.

3. Prufstation nach Anspruch 1 oder 2, dadurch gekennzeichnet, daß die Halteplatte (H) als Saugplatte (S) ausgebildet ist.

4. Prüfstation nach einem der vorhergehenden Ansprüche, dadurch gekennzeichnet, daß der Antrieb für die Halteplatte bzw. für die Abtastanordnung als Spindelantrieb (SPA) ausgebildet ist.

### Claims

1. A test station for an apparatus for the processing and transport of documents, in which it is possible to carry out a reading operation at least twice before the document is finally transported further or rejected, <u>characterised in that</u> in the test station there is a holding plate (H) which receives the document (BL) and which is movable past the reading device once each time in a to-and-fro movement parallel to the document plane and transversely relative to the direction of transports and reading can be carried out both during the forward movement and during the return movement.

2. A test station for an apparatus for the processing and transport of documents, in which a reading operation can be carried out at least twice before the document is finally transported further or rejected, <u>characterised in that</u> in the test station there is a holding plate which receives the document, and in that the scanning arrangement of the reading device, which is located opposite the holding plate, is movable past the document once each time in a to-and-fro movement parallel to the document plane and transversely relative to the direction of transport, and reading can be carried out both during the forward movement and during the return movement.

3. A test station according to Claims 1 or 2, <u>characterised in that</u> the holding plate (H) is designed as a suction plate (S).

4. A test station according to one of the preceding Claims, <u>characterised in that</u> the drive for the holding plate or for the scanning arrangement is designed as a spindle drive (SPA).

### Revendications

1. Poste de contrôle pour un dispositif de traitement et de transport de documents, dans lequel il est possible d'effectuer au moins une opération de lecture à deux reprises avant que le document soit définitivement évacué ou rejeté, caractérisé par le fait qu'il est prévu, dans le poste de contrôle, une plaque de retenue (H) qui reçoit le document (BL) et peut être déplacée, parallèlement au plan du document et transversalement dans la direction de transport, selon un déplacement aller et un déplacement de retour exécutés respectivement une fois devant le dispositif de lecture, la lecture pouvant être réalisée aussi bien pendant le déplacement aller que pendant le déplacement de retour.

2. Poste de contrôle pour un dispositif de traitement et de transport de documents, dans lequel il est possible d'effectuer au moins une opération de lecture à deux reprises avant que le document soit définitivement évacué ou rejeté, caractérisé par le fait que, dans le poste de contrôle, il est prévu une plaque de retenue recevant le document, et que le dispositif d'exploration du dispositif de lecture, qui est disposé en vis-à-vis de la plaque de retenue, peut être déplacé, parallèlement au plan du document et transversalement par rapport à la direction de transport, suivant un déplacement aller et un déplacement de retour exécutés respectivement une fois devant le document, la lecture pouvant être effectuée aussi bien pendant le déplacement aller que pendant le déplacement de retour.

3. Poste de contrôle suivant la revendication 1 ou 2, caractérisé par le fait que la plaque de retenue (H) est réalisée sous la forme d'une plaque (S) produisant une dépression.

4. Poste de contrôle suivant l'une des revendications précédentes, caractérisé par le fait que le dispositif d'entraînement pour la plaque de retenue ou pour le dispositif d'exploration est réalisé sous la forme d'un dispositif d'entraînement à broche (SPA).

SPA

S

H

BW

ABCDE
123456

ABC

BL

ZA

P1 P2